# FASCICULE DE BREVET EUROPEEN

(11) **EP 1 756 822 B1**
(45) Date de publication et mention de la délivrance du brevet: **03.06.2009**
(21) Numéro de dépôt: 05763744.9
(22) Date de dépôt: 29.04.2005
(51) Int. Cl.: G11B 9/07, G11B 9/08

(54) **SYSTEME D'ENREGISTREMENT D'INFORMATIONS ET PROCEDE D'UTILISATION D'UN TEL SYSTÈME**
DATENAUFZEICHNUNGSSYSTEM UND VERFAHREN ZU DESSEN VERWENDUNG
DATA RECORDING SYSTEM AND METHOD FOR USING SAME

(30) Priorité: 04.05.2004 FR 0404770
(43) Date de publication de la demande: 28.02.2007
(73) Titulaire: COMMISSARIAT A L'ENERGIE ATOMIQUE, 75015 Paris (FR)
(72) Inventeur: GIDON, Serge, F-38140 La Murette (FR); LE CARVAL, Gilles, F-38000 Grenoble (FR); CLERC, Jean-Frédéric, F-38320 Brie et Angonnes (FR)
(74) Mandataire: Jouvray, Marie-Andrée
(86) Numéro de dépôt international: PCT/FR2005/001069
(87) Numéro de publication internationale: WO 2005/122161

(56) Documents cités:
- EP-A- 1 227 496
- US-A- 5 018 018
- YOO M J ET AL: "SCANNING SINGLE-ELECTRON TRANSISTOR MICROSCOPY: IMAGING INDIVIDUAL CHARGES" avril 1997 (1997-04), SCIENCE, AMERICAN ASSOCIATION FOR THE ADVANCEMENT OF SCIENCE,, US, PAGE(S) 579-582 , XP000892011 ISSN: 0036-8075 le document en entier

## Description

### Domaine technique de l'invention

L'invention concerne un système d'enregistrement d'informations comportant un support d'enregistrement comportant une couche mémoire apte à stocker des informations et un dispositif de lecture et/ou écriture des informations, le support d'enregistrement comportant une pluralité d'îlots conducteurs, isolés électriquement, destinés à stocker des charges électriques fonction de l'information à stocker et créant des champs électriques correspondants, ledit dispositif comportant un réseau d'éléments isolants disposés en regard de la couche mémoire et solidaires d'un canal de transistor reliant une source et un drain,- le canal ayant une conductance susceptible d'être modifiée par le champ électrique créé par la charge de l'îlot disposé en regard de l'élément isolant, le système comportant des moyens de déplacement relatif des charges par rapport auxdits éléments isolants.

### État de la technique

L'enregistrement de données sous micro-pointes est possible sous de nombreuses approches, par exemple par effet magnétique, optique, électrique ou thermique. Généralement, un réseau de micro-pointes vient en contact ou en quasi-contact avec un support de données pour en modifier localement des propriétés afin de coder des informations. Ces techniques reposent sur des codages d'informations sous des formes aussi diverses que des trous dans une couche de matériaux plastiques ou des états de cristallisation différents pour des matériaux à changement de phase. Les informations sont ensuite lues, c'est-à-dire détectées, par l'intermédiaire des micro-pointes.

La technique Millipede^{®} de la société IBM, par exemple, utilise un réseau de micro-pointes pour écrire et lire des données sur un support en matériau polymère par un procédé thermomécanique (« The Millipede - More than one thousand tips for future AFM data storage » de P. Vettiger et al. dans IBM J. Res. Develop., Vol. 44, No. 3, May 2000). Cependant, cette technique nécessite beaucoup d'énergie pour le chauffage des micro-pointes à une température de l'ordre de 400°C.

Une autre technique utilise le changement de conductivité de matériaux à changement de phase par écriture électrique. Cependant, la lecture de tels points mémoire nécessite une électronique complexe et coûteuse en énergie.

L'article « Charging of single Si nanocrystals by atomic force microscopy » de E.A. Boer et al. (Applied Physics Letters, Vol. 78, No. 20, 14 May 2001) décrit l'injection de charge dans des.nano-cristaux disposés sur une surface isolante et la détection de la charge au moyen d'un microscope à force atomique (« Atomic Force Microscope : AFM »)..

L'article « Charge storage in Co nanoclusters embedded in SiO2 by scanning force microscopy " de D.M. Schaadt et al. (Applied Physics Letters, Vol. 74, No.3, 18 January 1999) décrit le stockage de charge dans des amas nanométriques insérés dans de la silice et la détection des charges par l'intermédiaire d'une micro-pointe. Les amas sont chargés par application d'impulsions de tension entre la micro-pointe et les amas.

L'article « Scanning Single-Electron Transistor Microscopy: Imaging Individual Charges » de M.J. Yoo et al. (Science, Vol. 276, 25 april 1997) décrit une pointe comportant, à son sommet, un transistor à un électron (« Single Electron Transistor : SET ») permettant de détecter la distribution de charge électrique sur une surface d'un échantillon.

Le brevet EP 1227496 décrit l'utilisation de dispositifs à effet de champ pour réaliser la lecture/écriture de données. Un support de données, comportant une grille et une couche mémoire, est disposé, en regard, d'un support comportant le reste des dispositifs à effet de champ, notamment, l'isolant de grille, le canal et les zones source et drain. Les charges présentes dans la couche mémoire modifient le fonctionnement du dispositif à effet de champ.

### Objet de l'invention

L'invention a pour but de remédier à ces inconvénients et, en particulier, de permettre de réaliser un système d'enregistrement ayant une très haute densité de stockage.

Selon l'invention, ce but est atteint par les revendications annexées et, en particulier, par le fait que chaque élément isolant est une micro-pointe comportant un élément à forte permittivité.

L'invention a également pour but un procédé d'utilisation du système d'enregistrement d'informations selon l'invention, comportant une étape d'écriture comportant l'injection de charge dans la couche mémoire par application d'une différence de potentiel entre l'électrode de commande et la source.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre un mode de réalisation particulier d'un système d'enregistrement d'informations selon l'invention.
Les figures 2 à 4 représentent trois modes de réalisation particuliers d'une micro-pointe d'un système d'enregistrement d'informations selon l'invention.
La figure 5 illustre un mode de réalisation particulier d'un système d'enregistrement d'informations selon l'invention, comportant un réseau d'électrodes.
La figure 6 illustre les variations d'un potentiel électrique créé par un réseau d'électrodes selon la figure 5.

### Description de modes particuliers de réalisation

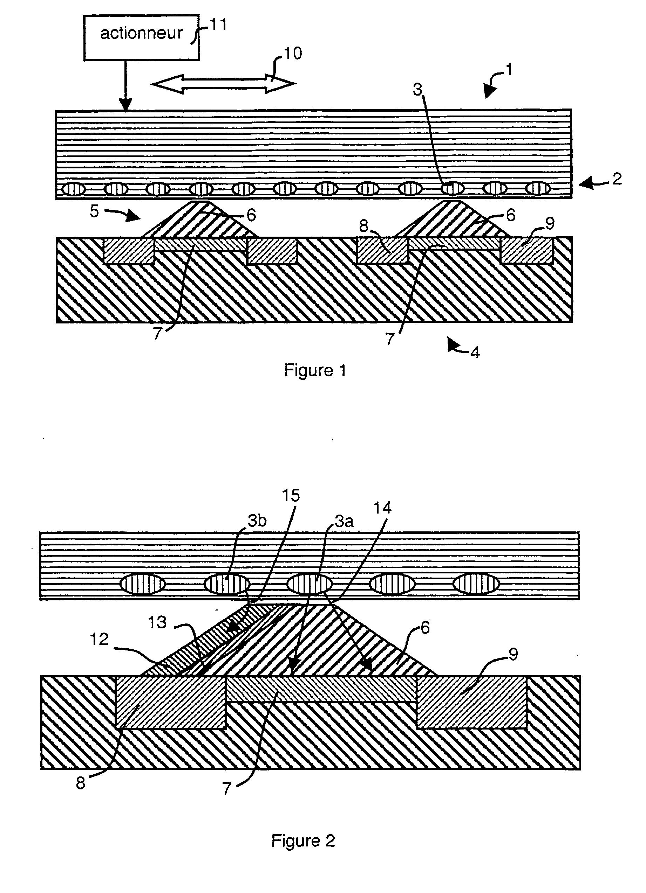

Le système d'enregistrement d'informations représenté sur la figure 1 comporte un support 1 d'enregistrement comportant une couche mémoire 2 apte à stocker des informations. La couche mémoire 2 comporte une pluralité d'îlots 3 conducteurs électriquement isolés permettant de stocker, sur les îlots 3, des charges électriques positives ou négatives créant des champs électriques correspondants. Les charges sont fonction de l'information à stocker, par exemple un îlot 3 chargé négativement correspond à une information binaire « 1 » et un îlot 3 électriquement neutre correspond à une information binaire « 0 ». On entend également par l'expression « îlots conducteurs », les îlots semi-conducteurs, par exemple en silicium, ainsi que des îlots faiblement conducteurs, par exemple en carbone.

Un dispositif 4 de lecture et/ou écriture des informations comporte un réseau de micro-pointes 5 disposés en regard de la couche mémoire 2. Chaque micro-pointe 5 comporte un élément 6 à forte permittivité solidaire d'un canal 7 de transistor reliant une source 8 et un drain 9. L'élément 6 à forte permittivité a, de préférence, une forme de tronc de pyramide ou de cône dont la base est solidaire du canal 7 de transistor. Chaque canal 7 a une conductance susceptible d'être modifiée par le champ électrique créé par la charge de l'îlot 3 disposé en regard de l'élément 6 à forte permittivité correspondant. Ainsi, l'état de charge dudit îlot 3 est détecté par l'intermédiaire d'une mesure d'un courant passant de la source 8 au drain 9.

Les îlots 3 ont des dimensions nettement inférieures aux dimensions du canal 7 de transistor et plusieurs îlots 3 peuvent être associés à chaque micro-pointe 5 et, ainsi, à chaque canal 7. Dans le mode de réalisation représenté à la figure 1, la couche mémoire 2 peut être déplacée latéralement par rapport aux micro-pointes 5, comme indiqué par une flèche 10, par l'intermédiaire d'un actionneur 11. Ainsi, les charges disposées sur les îlots 3 sont déplacées, avec les îlots 3, relativement aux micro-pointes 5. Il est également possible de déplacer le réseau de micro-pointes 5, par l'intermédiaire d'un actionneur, pour obtenir un déplacement relatif des îlots et des charges par rapport aux micro-pointes 5. Ainsi, les charges sur différents îlots 3 peuvent être détectées par une micro-pointe 5 unique associée audits îlots 3, même si l'écart entre deux îlots voisins est inférieur à 5nm et, ainsi, nettement inférieur à la largeur du canal 7 qui peut être de l'ordre de 20 nm en utilisant les technologies les plus avancées.

La couche mémoire 2 peut être constituée par des particules conductrices, par exemple en aluminium, constituant les îlots 3 et insérées dans un matériau isolant, par exemple un oxyde, par exemple l'alumine. En variante, la couche mémoire 2 peut être constituée de silice, par exemple sous forme de silice enrichie en silicium (« SRO : Silicon Rich Oxide »), et les particules conductrices peuvent comporter essentiellement du silicium. Suivant les conditions de fabrication particulières de la couche mémoire, la répartition des particules conductrices peut être aléatoire. Par ailleurs, plusieurs particules conductrices peuvent former un îlot 3 et/ou plusieurs îlots 3 peuvent former une zone de mémoire commune pour le stockage d'une charge, représentative, par exemple, d'une information binaire.

Dans le mode de réalisation particulier représenté à la figure 1, le canal 7 de transistor est constitué par un matériau dopé par un premier type de dopage, par exemple de type N (respectivement P), et la source 8 et le drain 9 sont constitués par un matériau dopé par un second type de dopage, par exemple de type P (respectivement N). Ainsi, le canal 7, la source et le drain présentent la même structure que le canal, la source et le drain d'un transistor de type MOSFET, l'îlot 3 remplissant une fonction d'électrode de grille de transistor et l'élément 6 à forte permittivité assurant le rôle de l'isolant de grille de transistor, notamment l'isolation électrique entre l'îlot 3 et le canal 7, d'une part, et la transmission efficace des lignes de champ électrique entre l'îlot 3 et le canal 7, d'autre part. Ainsi, l'ensemble constitué par le canal 7, la source 8, le drain 9, l'îlot 3 et l'élément 6 fonctionne comme un transistor MOSFET.

L'écart effectif entre un îlot 3 et le canal 7, lors de la lecture, ne doit pas excéder une certaine limite, déterminée par l'équivalent d'environ 1 nm de silice, ce qui correspond à 20nm d'un matériau de forte permittivité comme, par exemple, du HfO₂ du GdO₃ ou du Y₃O₃. Les îlots 3 sont disposés, de préférence, très proche de la surface de la couche mémoire 2. La hauteur de l'élément 6 à forte permittivité peut alors être de l'ordre de 20nm ce qui est de l'ordre de la largeur du canal 7. Les îlots 3 peuvent également être enterrés dans la couche mémoire 2, sous une couche isolante, éventuellement de forte permittivité, ce qui permet de protéger les îlots 3, en particulier dans le cas ou un déplacement relatif de la couche mémoire 2 par rapport aux micro-pointes 5 est prévu.

Sur la figure 2, la micro-pointe 5 comporte une couche 12 à forte permittivité disposée latéralement sur la micro-pointe 5 et séparée de l'élément 6 à forte permittivité par une couche 13 à faible permittivité. Ainsi, le champ électrique 14 créé par la charge d'un îlot 3a prédéterminé disposé en regard de la micro-pointe 5 est transmis au canal 7, tandis que le champ électrique 15 créé par un îlot voisin 3b est dévié. En effet, la couche 12 à forte permittivité intercepte les lignes de champ, qui sont par ailleurs écartées par la couche 13 à faible permittivité. La couche 13 à faible permittivité et la couche 12 à forte permittivité peuvent avoir une épaisseur de l'ordre de 1 nm à 5nm. Ceci permet alors, notamment dans le cas ou l'écart entre deux îlots voisin est de l'ordre de quelques nanomètres, de canaliser les lignes de champ et de ne détecter que la charge de l'îlot 3a prédéterminé.

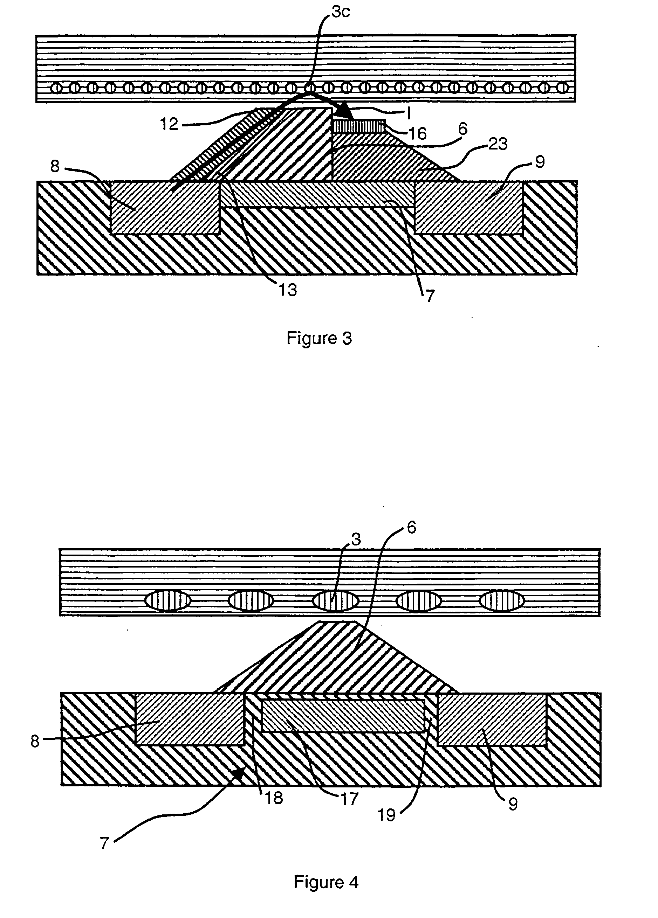

La micro-pointe 5 représenté à la figure 3, comporte une électrode 16 de commande disposée, de préférence, en bord de l'élément 6 à forte permittivité et du côté du drain 9 et séparé du canal 7 par une couche 23 de matériau isolant qui peut avantageusement être le matériau de l'élément 6. L'électrode 16 de commande permet un réglage du point de fonctionnement du transistor constitué par le canal 7, la source 8, le drain 9 et l'îlot 3. Lors de phases de repos, l'électrode 16 de commande est isolée électriquement, par exemple par l'intermédiaire d'un transistor de type MOSFET supplémentaire, bloqué dans un état de haute impédance, afin d'éviter une décharge des îlots 3 par des courants de fuite.

L'électrode 16 de commande permet également d'effectuer une étape d'écriture. L'étape d'écriture peut comporter l'injection de charge dans la couche mémoire 2 par application d'une différence de potentiel entre l'électrode 16 de commande et la source 8. Ainsi, un courant 1 électrique passe de la source 8 à l'électrode 16 de commande, comme représenté par une flèche à la figure 3. Par effet tunnel, une partie de ce courant est injectée dans un îlot 3c disposé en regard de la micro-pointe 5. Le potentiel électrique de l'électrode 16 de commande est, de préférence, positif et supérieur au potentiel de la source 8, afin d'obtenir un courant d'électrons en direction de l'électrode 16 de commande, dans le sens de la flèche sur la figure 3.

Sur la figure 4, le canal 7 de transistor comporte un second îlot 17 conducteur relié à la source 8 et au drain 9 respectivement par des jonctions tunnel 18 et 19. Ainsi, l'ensemble constitué par le canal 7, la source 8, le drain 9 et l'îlot 3 forment un transistor de type SET (« Single Electron Transistor : SET »). Dans ce cas, la micro-pointe 5 comporte, de préférence, une électrode 16 (non représentée à la figure 4) de commande pour le réglage du point de fonctionnement du transistor SET et, éventuellement; pour la compensation de l'influence d'impuretés de charge disposées en proximité du second îlot 17. De même, la micro-pointe 5 peut avantageusement comporter en surface une couche 13 à faible permittivité et une couche 12 à forte permittivité.

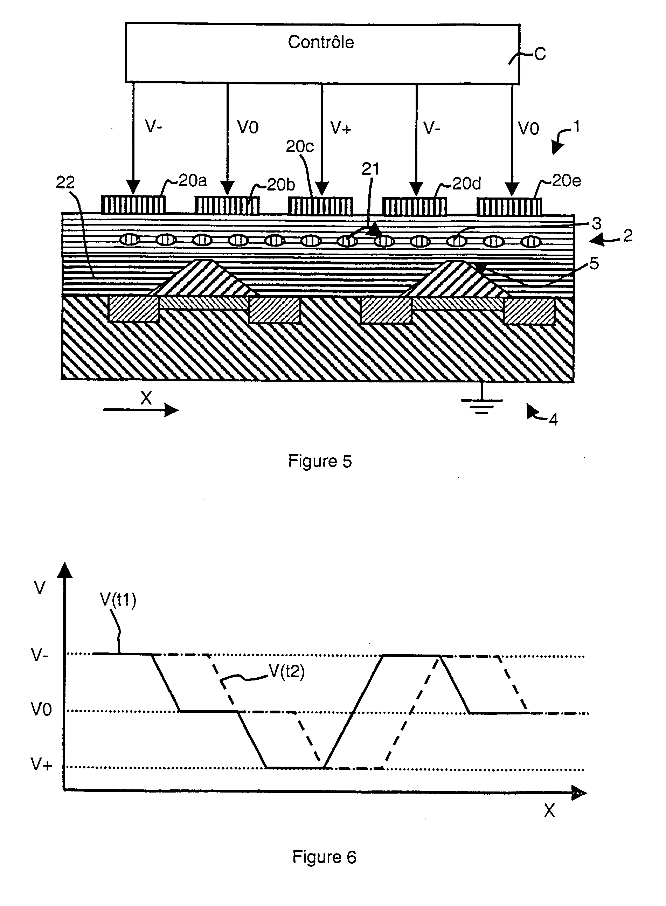

Dans le mode de réalisation particulier représenté à la figure 5, le support d'enregistrement 1 et le dispositif 4 de lecture et/ou écriture sont solidaires. Dans ce cas, les charges disposées sur les îlots 3 sont, de préférence, déplacées au moyen d'un champ électrique appliqué à la couche mémoire 2. Sur la figure 5, un réseau d'électrodes 20 commandé par un dispositif de contrôle C, est disposé à une face arrière de la couche mémoire 2 opposée à la face en regard des micro-pointes 5. Sur la figure 5, cinq électrodes 20a, 20b, 20c, 20d et 20e sont disposées selon un axe X. Le réseau d'électrodes 20 permet de provoquer le déplacement des charges d'un îlot 3 à l'autre selon l'axe X, comme représenté par une flèche 21 sur la figure 5. Par exemple, comme représenté aux figures 5 et 6, au moment t1, un potentiel V- est appliqué aux électrodes 20a et 20d, un potentiel V0 est appliqué aux électrodes 20b et 20e et un potentiel V+ est appliqué à l'électrode 20c. Ainsi, un puit de potentiel électrique est créé qui est décalé, au moment t2, selon l'axe X. Les charges électriques suivent alors le puit de potentiel et peuvent, ainsi, être déplacées par rapport aux micro-pointes 5, pour être détectées lorsqu'elles sont disposées sur un îlot 3 disposé en regard d'une micro-pointe 5. Afin d'obtenir un déplacement des charges bidimensionnel, un réseau bidimensionnel d'électrodes 20 est disposé à la face arrière de la couche mémoire 2.

Sur la figure 5, une seconde couche 22 à faible permittivité entoure toutes les micro-pointes 5, de manière à ce que la seconde couche 22 à faible permittivité et les micro-pointes 5 forment une surface plane commune. La seconde couche 22 peut être réalisé par dépôt d'un verre, par exemple un verre du type SOG (« Spin On Glass : SOG). L'ensemble constitué par la seconde couche 22 à faible permittivité et les micro-pointes 5 est, de préférence, planarisée lors d'une étape de planarisation commune, par exemple par polissage mécano-chimique. Dans le cas ou un déplacement relatif du support d'enregistrement 1 et du dispositif 4 de lecture est prévu, la seconde couche 22 permet d'assurer un contact mécanique uniforme et, ainsi, de protéger les micro-pointes 5. Dans le cas où le support d'enregistrement 1 et le dispositif 4 de lecture sont solidaires, la couche mémoire 2 peut être réalisée directement sur le dispositif 4 de lecture.

Le temps d'accès aux informations stockées est d'autant plus petit que la distance entre les micro-pointes est faible. La distance entre deux micro-pointes voisines est typiquement de l'ordre de quelques micromètres. Avec une vitesse de déplacement relatif entre les charges et les micro-pointes de 5mm/s, le temps d'accès est alors nettement inférieur à une milliseconde. Réduire le pas entre les micro-pointes est d'un autre intérêt, puisqu'il fixe également l'amplitude de déplacement relatif du support d'enregistrement par rapport au dispositif 4 et, ainsi, les contraintes de conception de l'actionneur de déplacement. Par ailleurs, de faibles amplitudes sont la clé pour un parfait contact des surfaces du dispositif 4 et de la couche mémoire 2.

L'invention n'est pas limitée aux modes de réalisation représentés. En particulier, il est envisageable de combiner un déplacement mécanique de la couche mémoire 2 par rapport aux micro-pointes 5 et un déplacement des charges par rapport aux îlots 3.

## Revendications

1. Système d'enregistrement d'informations comportant un support d'enregistrement (1) comportant une couche mémoire (2) apte à stocker des informations et un dispositif (4) de lecture et/ou écriture des informations, le support d'enregistrement (1) comportant une pluralité d'îlots (3) conducteurs, isolés électriquement, destinés à stocker des charges électriques fonction de l'information à stocker et créant des champs électriques correspondants, ledit dispositif comportant un réseau d'éléments isolants disposés en regard de la couche mémoire (2) et solidaires d'un canal (7) de transistor reliant une source (8) et un drain (9), le canal (7) ayant une conductance susceptible d'être modifiée par le champ électrique créé par la charge de l'îlot (3) disposé en regard de l'élément isolant, le système comportant des moyens de déplacement relatif des charges par rapport auxdits éléments isolants, système **caractérisé en ce que** chaque élément isolant est une micro-pointe (5) comportant un élément (6) à forte permittivité.

2. Système selon la revendication 1, **caractérisé en ce qu'**il comporte des moyens (11) de déplacement relatif de la couche mémoire (2) par rapport aux micro-pointes (5).

3. Système selon la revendication 1, **caractérisé en ce que**, le support d'enregistrement (1) et le dispositif (4) de lecture et/ou écriture étant solidaires, le système comporte un réseau d'électrodes (20) disposé à une face arrière de la couche mémoire (2) opposée à la face en regard des micro-pointes (5) et permettant de provoquer le déplacement des charges d'un îlot (3) à l'autre.

4. Système selon l'une quelconque des revendications 1 à 3, **caractérisé en ce que** la couche mémoire (2) comporte des particules conductrices insérées dans un matériau isolant.

5. Système selon la revendication 4, **caractérisé en ce que** le matériau isolant comporte de la silice et les particules conductrices comportent du silicium.

6. Système selon l'une quelconque des revendications 1 à 5, **caractérisé en ce que** le canal (7) de transistor est constitué par un matériau dopé par un premier type (N resp. P) de dopage et la source (8) et le drain (9) sont constitués par un matériau dopé par un second type (P resp. N) de dopage.

7. Système selon l'une quelconque des revendications 1 à 5, **caractérisé en ce que** le canal (7) de transistor comporte un second îlot (17) conducteur relié à la source (8) et au drain (9) respectivement par des jonctions tunnel (18, 19).

8. Système selon l'une quelconque des revendications 1 à 7, **caractérisé en ce que** l'élément (6) à forte permittivité a une forme de tronc de pyramide dont la base est solidaire du canal (7) de transistor.

9. Système selon l'une quelconque des revendications 1 à 8, **caractérisé en ce que** chaque micro-pointe (5) comporte une couche (12) à forte permittivité disposée latéralement sur la micro-pointe (5) et séparée de l'élément (6) à forte permittivité par une couche (13) à faible permittivité.

10. Système selon l'une quelconque des revendications 1 à 9, **caractérisé en ce qu'**il comporte une seconde couche (22) à faible permittivité entourant toutes les micro-pointes (5), de manière à ce que la seconde couche (22) à faible permittivité et les micro-pointes (5) forment une surface plane commune.

11. Système selon l'une quelconque des revendications 1 à 10, **caractérisé en ce que** chaque micro-pointe (5) comporte une électrode (16) de commande.

12. Procédé d'utilisation d'un système d'enregistrement d'informations selon la revendication 11, **caractérisé en ce qu'**il comporte une étape d'écriture comportant l'injection de charge dans la couche mémoire (2) par application d'une différence de potentiel entre l'électrode (16) de commande et la source (8).

## Claims

1. Data recording system comprising a recording medium (1) comprising a storage layer (2) able to store data and a data read and/or write device (4), the recording medium comprising a plurality of electrically insulated conductive dots (3) designed to store electric charges according to the data to be stored and creating corresponding electric fields, said device comprising an array of insulating elements arranged facing the storage layer (2), integral to a transistor channel (7) connecting a source (8) and a drain (9), the channel (7) having a conductance able to be modified by the electric field created by the charge of the dot (3) arranged facing the insulating element, the system comprising means for relative displacement of the charges with respect to said insulating elements, system **characterized in that** each insulating element is a micro-tip (5) comprising a high-permittivity element (6)

2. System according to claim 1, **characterized in that** it comprises means (11) for relative displacement of the storage layer (2) with respect to the micro-tips (5).

3. System according to claim 1, **characterized in that**, the recording medium (1) and the data read and/or write device (4) being integral to one another, the system comprises an array of electrodes (20) arranged on a rear face of the storage layer (2) opposite the face facing the micro-tips (5) and able to cause displacement of the charges from one dot (3) to the other.

4. System according to any one of the claims 1 to 3, **characterized in that** the storage layer (2) comprises conductive particles inserted in an insulating material.

5. System according to claim 4, **characterized in that** the insulating material comprises silica and the conductive particles comprise silicon.

6. System according to any one of the claims 1 to 5, **characterized in that** the transistor channel (7) is formed by a material doped by a first type (N resp. P) of doping and the source (8) and drain (9) are formed by a material doped by a second type (P resp. N) of doping.

7. System according to any one of the claims 1 to 5, **characterized in that** the transistor channel (7) comprises a second conductive dot (17) connected to the source (8) and drain (9) respectively by tunnel junctions (18, 19).

8. System according to any one of the claims 1 to 7, **characterized in that** the high-permittivity element (6) has the shape of a truncated pyramid the base whereof is integral to the transistor channel (7).

9. System according to any one of the claims 1 to 8, **characterized in that** each micro-tip (5) comprises a high-permittivity layer (12) arranged laterally on the micro-tip (5) and separated from the high-permittivity element (6) by a low-permittivity layer (13).

10. System according to any one of the claims 1 to 9, **characterized in that** it comprises a second low-permittivity layer (22) surrounding all the micro-tips (5), so that the second low-permittivity layer (22) and the micro-tips (5) form a common flat surface.

11. System according to any one of the claims 1 to 10, **characterized in that** each micro-tip (5) comprises a control electrode (16).

12. Method for using a data recording system according to claim 11, **characterized in that** it comprises a write step involving injection of a charge into the storage layer (2) by applying a potential difference between the control electrode (16) and the source (8).

## Patentansprüche

1. Datenaufzeichnungssystem, das ein Aufzeichnungssubstrat (1) umfasst, das eine Speicherschicht (2) hat, die geeignet ist, Daten zu speichern, sowie eine Datenlese- und/oder -schreibvorrichtung (4), wobei das Aufzeichnungssubstrat (1) mehrere leitende Inseln (3) aufweist, die elektrisch isoliert und dazu bestimmt sind, elektrische Ladungen zu speichern, die abhängig sind von den zu speichernden Daten, und entsprechende elektrische Felder zu erzeugen, welche Vorrichtung ein Netz aus isolierenden Elementen umfasst, die gegenüber der Speicherschicht (2) angeordnet und fest verbunden sind mit einem Transistorkanal (7), der eine Source (8) und einen Drain (9) miteinander verbindet, welcher Kanal (7) einen Leitwert hat, der durch das elektrische Feld verändert werden kann, das von der gegenüber dem isolierenden Element angeordneten leitenden Insel (3) erzeugt wurde, wobei das Sysem Mittel zum relativen Verschieben der Ladungen bezüglich der isolierenden Elemente umfasst, System, das **dadurch gekennzeichnet ist, dass** jedes isolierende Element eine Mikrospitze (5) mit einem Element (6) mit hoher Permittivität ist.

2. System nach Anspruch 1, **dadurch gekennzeichnet, dass** es Mittel (11) zum relativen Verschieben der Speicherschicht (2) bezüglich den Mikrospitzen (5) umfasst.

3. System nach Anspruch 1, **dadurch gekennzeichnet, dass** das Aufzeichnungssubstrat (1) und die Lese- und/oder Schreibvorrichtung (4) fest miteinander verbunden sind und dass das System ein Netz aus Elektroden (20) umfasst, das auf einer Rückseite der Speicherschicht (2) angeordnet ist, die entgegengesetzt zu der Seite angeordnet ist, die sich gegenüber den Mikrospitzen (5) befindet, und das Verschieben der Ladungen von einer Insel (3) zur anderen ermöglicht.

4. System nach einem der Ansprüche 1 bis 3, **dadurch gekennzeichnet, dass** die Speicherschicht (2) leitende Partikel umfasst, die in ein isolierendes Material eingebettet sind.

5. System nach Anspruch 4, **dadurch gekennzeichnet, dass** das isolierende Material Siliziumdioxid umfasst und die leitenden Partikel Silizium umfassen.

6. System nach einem der Ansprüche 1 bis 5, **dadurch gekennzeichnet, dass** der Transistorkanal (7) von einem mit einem ersten Dotierungstyp (N bzw. P) dotierten Material und die Source (8) und der Drain (9) von einem mit einem zweiten Dotierungstyp (P bzw. N) dotierten Material gebildet wird.

7. System nach einem der Ansprüche 1 bis 5, **dadurch gekennzeichnet, dass** der Transistorkanal (7) eine zweite leitende Insel (17) umfasst, die mit der Source (8) und dem Drain (9) jeweils über Tunnelverbindungen (18, 19) verbunden ist.

8. System nach einem der Ansprüche 1 bis 7, **dadurch gekennzeichnet, dass** das Element (6) mit hoher Permittivität die Form eines Pyramidenstumpfs hat, dessen Basis fest mit dem Transitorkanal (7) verbunden ist.

9. System nach einem der Ansprüche 1 bis 8, **dadurch gekennzeichnet, dass** jede Mikrospitze (5) eine Schicht (12) mit hoher Permittivität umfasst, die seitlich an der Mikrospitze (5) angeordnet und von dem Element (6) mit hoher Permittivität durch eine Schicht (13) mit niedriger Permittivität getrennt ist.

10. System nach einem der Ansprüche 1 bis 9, **dadurch gekennzeichnet, dass** es eine zweite Schicht (22) mit niedriger Permittivität umfasst, die alle Mikrospitzen (5) umschließt, sodass die zweite Schicht (22) mit niedriger Permittivität und die Mikrospitzen (5) eine gemeinsame ebene Fläche bilden.

11. System nach einem der Ansprüche 1 bis 10, **dadurch gekennzeichnet, dass** jede Mikrospitze (5) eine Steuerelektrode (16) umfasst.

12. Verfahren zur Verwendung eines Datenaufzeichnungssystems nach Anspruch 11, **dadurch gekennzeichnet, dass** es einen Schreibschritt umfasst, der die Ladungszuführung in die Speicherschicht (2) durch Anlegen einer Potenzialdifferenz zwischen der Steuerelektrode (16) und der Source (8) umfasst.
